# FASCICULE DE BREVET EUROPEEN

(11) **EP 2 066 474 B1**
(45) Date de publication et mention de la délivrance du brevet: **27.01.2010**
(21) Numéro de dépôt: 07823772.4
(22) Date de dépôt: 05.09.2007
(51) Int. Cl.: B23K 1/00, F28F 21/04

(54) **PROCEDE DE FABRICATION D'UN DISPOSITIF DE TYPE ECHANGEUR DE CHALEUR EN CARBURE DE SILICIUM ET DISPOSITIF EN CARBURE DE SILICIUM REALISE PAR LE PROCEDE**
VERFAHREN ZUR HERSTELLUNG EINER SILICIUMCARBID-WÄRMETAUSCHVORRICHTUNG UND IN DIESEM VERFAHREN HERGESTELLTE SILICIUMCARBID-WÄRMETAUSCHVORRICHTUNG
PROCESS FOR MANUFACTURING A SILICON CARBIDE HEAT EXCHANGER DEVICE, AND SILICON CARBIDE DEVICE PRODUCED BY THE PROCESS

(30) Priorité: 12.09.2006 FR 0653680
(43) Date de publication de la demande: 10.06.2009
(73) Titulaire: Boostec S.A., 65460 Bazet (FR)
(72) Inventeur: FERRATO, Marc, 65310 Horgue (FR)
(74) Mandataire: Vannini, Torquato
(86) Numéro de dépôt international: PCT/FR2007/051875
(87) Numéro de publication internationale: WO 2008/031966

(56) Documents cités:
- DE-A1-102005 054 093
- US-A- 4 488 920
- US-A- 5 234 152
- US-A1- 2004 244 954

## Description

La présente invention concerne un procédé de fabrication d'un dispositif de type échangeur de chaleur en carbure de silicium. Elle concerne également les dispositifs de type échangeurs de chaleur en céramique ou échangeurs réacteurs réalisés par le procédé.

L'invention s'applique plus particulièrement aux échangeurs de chaleur en carbure de silicium formés d'un assemblage de couches face contre face (dites également couches superposées).

On entend par échangeurs de chaleur, les échangeurs de chaleur permettant un transfert thermique entre l'air ambiant et un fluide traversant l'échangeur ou entre deux fluides traversant l'échangeur, et également les échangeurs réacteurs qui permettent avec un transfert thermique de provoquer une réaction chimique.

Il existe des échangeurs céramiques formés de couches assemblées face contre face. L'assemblage des plaques est une étape critique du procédé d'élaboration qui influence fortement la fiabilité, la performance et le coût de ces équipements.

Les procédés d'assemblage sont de deux types : A)- les assemblages démontables et B)- ceux qui ne le sont pas.
A) La première famille rassemble des techniques bien connues de l'art. L'assemblage mécanique est une de ces techniques largement utilisées pour la construction des échangeurs métalliques. Cette technique est applicable aux échangeurs céramiques. Un joint, le plus souvent en matériau élastomère mais qui peut être métallique, est nécessaire afin d'assurer l'étanchéité entre les plaques. Le serrage de l'ensemble est typiquement réalisé par un système vis-écrou.
   Cette technique présente deux inconvénients majeurs : 1/l'introduction d'un autre matériau (élastomère ou métal) moins résistant aux agressions chimiques et/ou thermiques mais également moins résistant à l'abrasion comparativement à la céramique; 2/ la nécessité de rectifier les surfaces céramiques mises en contact afin d'éviter la rupture des plaques lors du serrage. Il est connu de l'art que cette opération est d'une part incontournable dans le cas des matériaux fragiles et de plus elle obère significativement le coût de fabrication des pièces céramiques.
   Un autre inconvénient, lié à cette opération d'usinage de finition, est la création d'hétérogénéité sur les diamètres hydrauliques dont l'amplitude est fonction de la déformation des plaques issues du frittage.
B) La seconde famille regroupe les techniques a) de collage, b) de soudage et c) de brasage.

On parlera de soudage/diffusion dans le cas des matériaux céramiques.

Chacune de ces trois techniques, présente des inconvénients qui vont être décrits afin de mettre de mieux comprendre les avantages de l'invention.
a) Le collage des céramiques est un procédé connu de l'art qui présente les mêmes inconvénients que ceux précédemment associés aux techniques mettant en oeuvre des joints d'étanchéité.
   Pour rappel, ces inconvénients sont :
   1/l'introduction d'un autre matériau (de la colle) moins résistant aux agressions thermo-chimiques comparativement à la céramique;
   2/ la nécessité de rectifier les surfaces céramiques afin d'une part, d'effacer les déformations générées par le frittage, et d'autre part, de maîtriser la chimie de surface du matériau à coller. Ces deux caractéristiques sont essentielles aux performances mécaniques de l'assemblage.
      Comme il est dit précédemment, cette opération de rectification obère significativement le coût de fabrication d'un assemblage céramique. De plus le film polymère (la colle) peut constituer une limite à la performance thermique.
   b) Le soudage/diffusion du carbure de silicium est un procédé breveté (W02006029741) principalement en vue de la réalisation d'échangeur de chaleur. II consiste à solidariser plusieurs plaques céramiques grâce à l'effet conjugué de la température et de la pression, et cela sans apport de tiers matériau. Les niveaux de pression à appliquer (de l'ordre de la centaine de MPa) imposent évidemment un excellent contact entre les plaques afin d'éviter leur rupture. Cette exigence impose une opération de rectification des surfaces en contact avec les inconvénients décrits et rappelés précédemment.
   c) Le brasage consiste, quant à lui, à assembler deux pièces par l'intermédiaire d'un troisième matériau (la brasure) porté temporairement à l'état liquide puis re-solidifié. Un tel procédé est connu du document US 4,488,920.

Un cycle de brasage consiste donc en un chauffage, un maintien à une température supérieure au point de fusion de la brasure et un refroidissement jusqu'à la température ambiante. La qualité d'un joint brasé est conditionnée par l'étalement de la brasure (nécessité d'un bon mouillage caractérisé par un angle de mouillage <30° afin d'obtenir un écoulement de type capillaire), par la création de la liaison au cours de la solidification de la brasure soit par accostage mécanique (rugosité de surface), soit par formation d'une liaison à l'échelle atomique et par le maintien de cette liaison au cours du refroidissement.

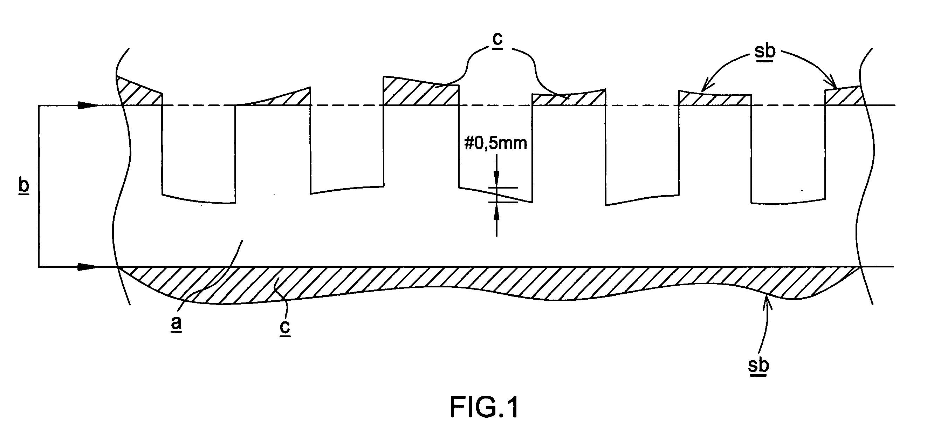

Préalablement à ce traitement à haute température, chacune des plaques mises en forme est densifiée par traitement thermique à haute température. Chacune des plaques est ensuite rectifiée sur ses deux grandes faces comme l'illustre le schéma de la figure 1. L'épaisseur du joint doit être la plus faible possible (inférieure à la centaine de microns) et préférentiellement inférieure à 20 µm afin de conférer à l'assemblage brasé une parfaite étanchéité ainsi que des propriétés mécaniques identiques à celles du matériau monolithique.

Afin de maintenir des joints fins tout au long du procédé de brasage, le serrage des plaques à haute température est nécessaire. Cette opération mécanique nécessite des outillages réfractaires, souvent complexes.

De plus, un autre inconvénient du procédé de brasage est qu'il impose une procédure très stricte de nettoyage des surfaces à assembler afin de les débarrasser de toutes les pollutions accumulées tout au long du procédé (huiles de rectification, poussières d'atelier, manipulation...).

Cette revue des procédés connus d'assemblage de pièces céramiques montre que l'opération de rectification est une opération incontournable et commune à l'ensemble des procédés d'assemblage de plaques céramiques (collage, brasage, soudage/diffusion et assemblage mécanique).

Il est connu de l'art que cette opération obère significativement le coût des pièces. De plus, elle ajoute deux autres contraintes, celles-ci d'ordre technique, qui contribuent également à freiner le développement de ce produit :
- la fragilisation des pièces. En effet, la céramique n'est pas un matériau ductile à température ambiante, les efforts induits par la meule de rectification provoquent des microfissures qui affaiblissent les propriétés mécaniques du carbure de silicium.
- la création d'hétérogénéité au niveau de la dimension des canaux comme l'illustre le schéma de la figure 1. Typiquement, une plaque céramique de type carbure de silicium présente un défaut de planéité après frittage de l'ordre de 0.5mm dans le cas d'une surface d'environ 200x300mm. Dans ces conditions, après rectification, on observe une inévitable variation de la hauteur des canaux de passage des fluides. Le diamètre hydraulique n'est donc pas constant pour une même plaque. Cette variation est intimement liée aux procédés de frittage et aux déformations qu'il génère, ainsi qu'à la dimension des plaques à fabriquer. Cette valeur ne peut être nulle et augmente avec la taille des pièces à fabriquer. Elle se situe typiquement dans la plage 0.1 - 1mm pour des plaques de dimension compatible des industries utilisatrices de ce type d'équipement (chimie, énergie, pétrochimie, pharmachimie, ...). Typiquement, la dimension d'une plaque d'échangeur de l'industrie est dans la plage 10cm-100cm.

La présente invention s'affranchit de l'ensemble de ces contraintes de fabrication en proposant un procédé simple et innovant qui évite de manière inattendue l'étape de rectification jusqu'à ce jour considérée comme incontournable. Cette opération, comme cela a été décrit précédemment est très consommatrice de temps, affaiblit les propriétés mécaniques de la céramique (microfissuration de surface) et modifie le comportement hydraulique de l'échangeur (réduction des canaux par enlèvement de matière). De plus, elle impose une étape de nettoyage afin d'éliminer les huiles de rectification nuisibles à l'assemblage.

Le procédé selon l'invention est compatible avec la réalisation de petites pièces mais également et surtout, la réalisation de très grandes dimensions (supérieures au mètre) et ce, quelles que soient leurs complexités (ce qui n'est pas le cas de l'ensemble des procédés existants). L'assemblage obtenu est parfaitement étanche et très résistant mécaniquement. Le comportement hydraulique est parfaitement maîtrisé car la section de passage des fluides reste constante.

Comparativement aux procédés d'assemblage de l'art décrits précédemment, le procédé selon l'invention rend les systèmes ainsi assemblés ;

### - plus fiable

1-en évitant le traumatisme causé par la rectification,
2-en garantissant une faible épaisseur du joint de brasure (<100µm).

### - plus économique

1-en évitant l'opération de rectification et les opérations associées,
2-en évitant la conception et fabrication des outillages de brasage,
3-en évitant les opérations de lavage des surfaces à assembler.

### - plus performant

1-thermiquement ainsi que du point de vue hydraulique car la section de passage des fluides est parfaitement maîtrisée,
2-mécaniquement en conservant les surfaces brutes de frittage donc non traumatisées par l'étape de rectification.

La présente invention a plus particulièrement pour objet, un procédé de fabrication d'un dispositif de type échangeur de chaleur en carbure de silicium comprenant les étapes décrites ci-après:
- la réalisation de plaques par pressage de poudre de céramique et usinage de ces plaques à l'état cru sur au moins une face, de manière à réaliser des chemins de circulation respectifs pour un premier et un deuxième fluide,
- l'empilement des plaques est réalisé, contrairement à tous les procédés connus, à l'état cru avant le traitement thermique du matériau,
- un premier traitement thermique de densification au cours duquel des liaisons se créent rendant ainsi le bloc monolithique,
- un second traitement thermique, afin d'assurer l'étanchéité des interfaces donc de l'échangeur.

Le premier traitement thermique consiste à densifier et rendre étanches les plaques, et pour cela le niveau de température à atteindre dans le cas du SiC fritté naturel est supérieur à 2000°C.

Le deuxième traitement thermique consiste à porter l'ensemble à la température de fusion de la brasure, typiquement pour des brasures à base de silicium, la température de brasage se situe dans la plage 1300°C-1500°C.

La pâte de brasure est déposée préalablement au démarrage du deuxième cycle thermique. De préférence, cette pâte de brasure est déposée dans des zones aménagées à cet effet sur l'échangeur fritté.

La pâte à brasure est généralement constituée d'un mélange de poudres minérales et/ou métalliques et de liants organiques, ces additifs organiques confèrent la plasticité nécessaire à la pose du mélange visqueux dans les zones spécifiquement prévues à cet effet, ces zones (réservoirs) sont aménagées sur les pièces céramiques à assembler et sont définies dès l'étape amont de conception de l'échangeur.

L'usinage à l'état cru des plaques céramiques comprend, la réalisation sur chaque plaque, d'une zone active d'échange de chaleur et la réalisation de zones de distribution dont les géométries sont non limitées à des géométries planes.

La mise en forme des céramiques d'échange de chaleur comprend, l'usinage de plusieurs sillons de circulation indépendants permettant une circulation d'un premier fluide entre deux plaques adjacentes, d'une entrée de distribution de la plaque vers une sortie.

Pour une plaque donnée, la réalisation des zones actives d'échange de chaleur comprend, l'usinage d'un sillon de circulation parcourant la plaque d'une entrée de distribution de la plaque vers une sortie et éventuellement le biseautage des extrémités pour la réalisation des réservoirs.

L'invention a également pour objet un dispositif en céramique, comprenant un assemblage de plaques céramiques formant un bloc monolithique étanche obtenu par le procédé décrit.

Pour assurer une fonction d'échangeur, le bloc monolithique comprend au moins un empilement de plusieurs plaques, chaque plaque comprenant en outre une entrée et une sortie de distribution pour un premier fluide et une entrée et une sortie pour un deuxième fluide.

Pour assurer une fonction d'échangeur/réacteur, le bloc monolithique comprend au moins un empilement de plusieurs plaques de type différent alternées, les plaques d'un premier type comprenant en outre une entrée et une sortie de distribution pour un premier fluide, et les plaque d'un deuxième type comprenant et une entrée et une sortie pour un deuxième fluide.

Les diamètres hydrauliques des canaux de circulation des fluides sont constants quelle que soit la section choisie de canal et sa position sur la plaque.

Les plaques comportent des extrémités biseautées réalisées à l'état cru avant l'étape de brasure afin de former des zones réservoir pour la pâte à brasure.

D'autres particularités et avantages de l'invention apparaîtront clairement à la lecture de la description qui est faite ci-après et qui est donnée à titre d'exemple illustratif et non limitatif et en regard des figures sur lesquelles :
- La figure 1, un schéma d'une coupe d'un échangeur assemblé suivant un procédé de l'art antérieur faisant intervenir la rectification (brasage classique, soudage diffusion),
- la figure 2, un organigramme de fabrication du procédé inventé comparé au procédé classique,
- La figure 3 un schéma d'une coupe d'un échangeur réalisé suivant le présent procédé après l'opération de cofrittage,
- la figure 4, un schéma d'une coupe d'un échangeur réalisé suivant le présent procédé lors de l'étape de brasage,
- La figure 5 un schéma d'un échangeur selon la présente invention,
- la figure 6, un schéma d'une vue éclatée d'un échangeur selon un premier mode de réalisation permettant d'assurer une fonction d'échangeur thermique classique,
- la figure 7, un schéma d'une vue éclatée d'un échangeur selon un deuxième mode de réalisation permettant d'assurer une fonction d'échangeur réacteur.

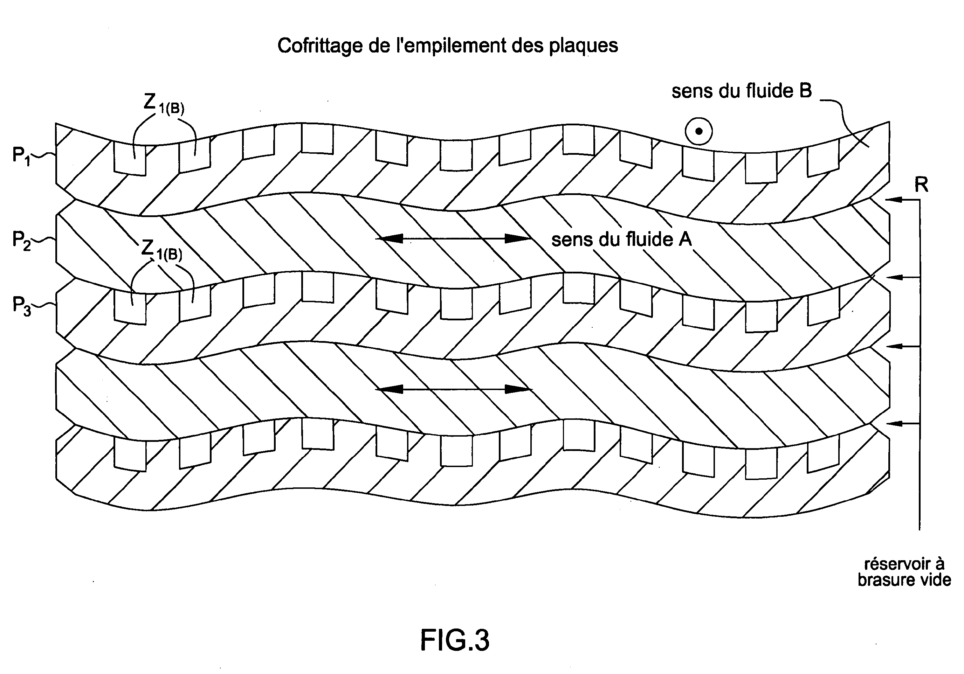

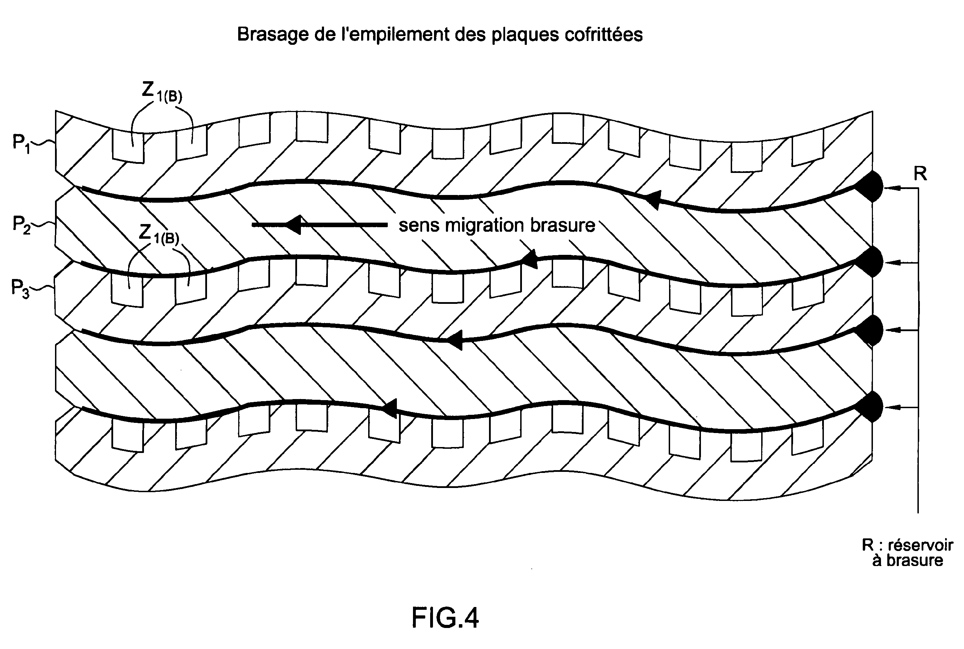

Comme on peut le voir sur le schéma de la figure 1 (art antérieur), la région a illustre la plaque obtenue après rectification, les lignes b illustrent les surfaces rectifiées prêtes à être assemblées, les régions c illustrent la matière enlevée par rectification, et les lignes sb illustrent les surfaces brutes de frittage. On peut voir à partir de cette figure que la hauteur des canaux n'est pas constante sur l'ensemble de la pièce créant ainsi des hétérogénéités sur le diamètre hydraulique. Au contraire, avec le procédé proposé comme on va le voir à partir des figures 3 et 4, on n'a pas cet inconvénient.

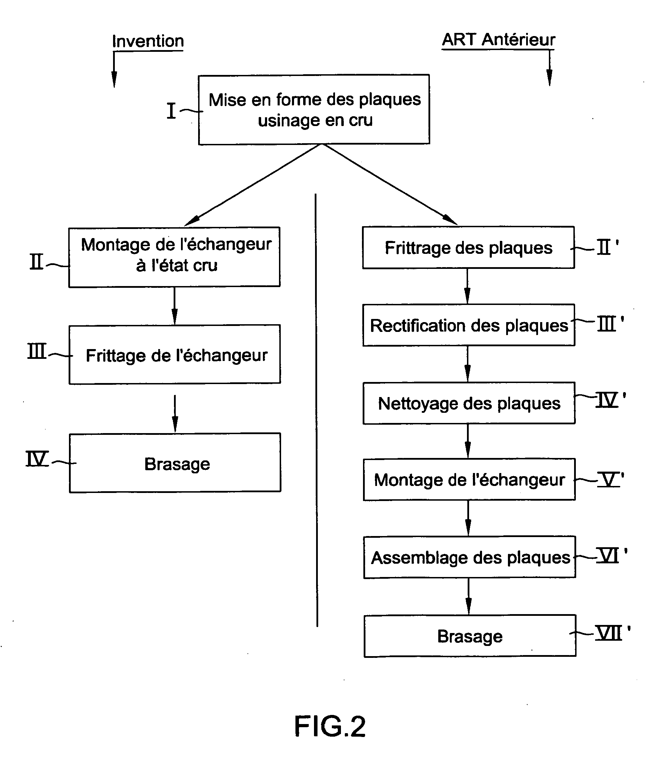

La figure 2 illustre les étapes I à IV mises en oeuvre par le procédé objet de l'invention et les étapes 1 II' à VII' correspondent aux étapes d'un procédé de l'art antérieur.
Les étapes I à IV de l'invention sont les suivantes :
I- La mise en forme des plaques est réalisée par pressage de poudre de céramique et usinage de ces plaques à l'état cru sur au moins une face, de manière à réaliser des chemins de circulation respectifs pour un premier et un deuxième fluide,
II- Le montage de l'échangeur à l'état cru consiste à empiler les plaques, contrairement à tous les procédés connus, à l'état cru avant le traitement thermique du matériau. Les plaques sont empilées conformément à la disposition finale spécifiée par le besoin du client.
III- le frittage de l'échangeur correspond au premier traitement thermique et permet d'obtenir un bloc monolithique, manipulable et apte chimiquement et physiquement, à l'opération de brasage. Le niveau de température à atteindre dans le cas du SiC fritté naturel est supérieur à 2000°C. Les plaques après cette opération sont densifiées et étanches.
IV- le deuxième traitement thermique permet d'obtenir l'étanchéité des interfaces et est distinct du premier traitement par le niveau de température (<2000°C) et par la nature de l'atmosphère (vide primaire). Au cours de ce traitement la pâte à brasée préalablement déposée, va fondre. Une phase liquide se forme puis migrera aux interfaces du bloc préalablement densifié. L'étanchéité est obtenue lors de la solidification de cette phase liquide.

Ainsi, l'opération de préparation des surfaces frittées avant l'assemblage est évitée. Les plaques présentent les même variations de planéité comme illustré par les figures 3 et 4 , ces variations ne dépassant pas 0,5mm.
Le premier traitement thermique permet de :
1- densifier le matériau,
2- donner une bonne cohésion au bloc assemblé afin i/d'autoriser sa manipulation ultérieure, ii/de permettre la pose de la pâte à braser et iii/de s'affranchir des outillages de serrage nécessaires à l'opération de brasage.
3- créer des interfaces adaptées à la brasure ce qui se traduit en terme de caractéristiques des surfaces créées par : 1)- un angle de mouillage surface/brasure <30°, 2)- une épaisseur de jeu entre plaques inférieures à la centaine de microns. Des mesures ont été faites et ont donné une épaisseur pour le joint de 30 à 50µm.
4- De manière inattendue, le procédé selon l'invention conduit, dans le cas particulier de plaques en carbure de silicium et d'une brasure à base de silicium, à la création de surfaces répondant à ces critères.

Le second traitement thermique de brasage est un cycle thermique totalement différencié du premier principalement par le niveau de température beaucoup plus faible. Il n'est pas envisageable par exemple de réaliser ces deux traitements thermiques en une seule étape car la pâte à braser ne supporte pas les conditions du premier traitement. Par contre le même four peut être utilisé pour chacune de ces étapes. La solution la plus pratique est de dédié un four pour chaque opération.

La pâte de brasure est déposée préalablement au démarrage du deuxième cycle thermique dans les zones aménagées à cet effet pendant l'étape I) sur l'échangeur fritté. Cette pâte est généralement constituée d'un mélange de poudres minérales et/ou métalliques et de liants organiques.

Ces additifs organiques confèrent la plasticité nécessaire à la pose du mélange visqueux dans les zones spécifiquement prévues à cet effet. Ces zones (réservoirs) sont aménagées sur les pièces céramiques à assembler. Elles sont définies dès l'étape amont de conception de l'échangeur.

Le procédé proposé est particulièrement avantageux car il simplifie très significativement la construction d'échangeurs à plaques céramiques en éliminant l'opération d'usinage par rectification ainsi que les opérations d'assemblage pour le brasage. L'absence de pression à appliquer sur les plaques à assembler est également un atout qui offre une liberté accrue au concepteur des dispositifs d'échanges en particulier pour la conception des systèmes de connectique. En particulier, des collecteurs de fluides tout en céramiques peuvent être assemblés suivant la présente invention. L'absence de pression est naturellement un atout pour la réalisation des échangeurs de grande dimension (supérieurs à un format A4).

Les schémas des figures 3 et 4 sont des sections, données à titre indicatif parmi de nombreux exemples possibles, d'un échangeur à flux croisé obtenu par le procédé de l'invention.

Sur ces figures 3 et 4 on peut mieux voir les caractéristiques géométriques des interfaces. La figure 3 correspond à l'étape de cofrittage de l'empilement des plaques et d'illustrer le bon accord géométrique d'une plaque à l'autre. Lors de l'étape de cofrittage (figure 3), à cause de la ductilité de la céramique à sa température de frittage, les plaques se déforment de manière identique, ce mécanisme assure un bon contact entre chaque plaque, compatible des exigences de l'opération de brasage (épaisseur de joint < 100microns). L'espace créé inférieur à la centaine de micron permet l'écoulement de la brasure sur l'ensemble des surface à étanchéifiée par migration capillaire de la brasure suivant le schéma de la figue 4.

Le schéma de la figure 4, illustre une coupe d'un échangeur à flux croisé réalisé suivant le procédé. Elle correspond plus particulièrement à l'étape de brasure, de la pâte à braser ayant été mise dans les réservoirs R. Ce schéma montre que le diamètre hydraulique est le même sur l'ensemble de la pièce (échangeur). Les interfaces sont remplies de brasure assurant l'étanchéité et les propriétés mécaniques de l'assemblage.

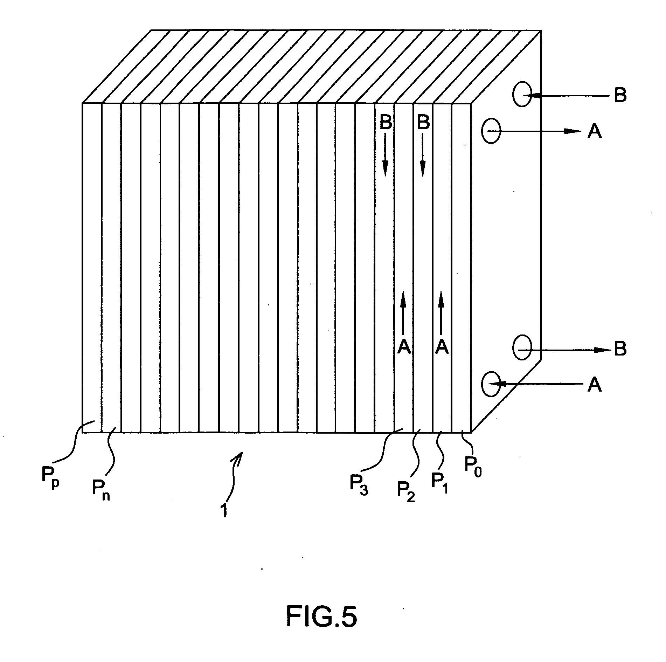

La description qui va suivre est donnée à titre d'exemple pour illustrer deux dispositifs réalisés par une mise en oeuvre du procédé. Les schémas des figures 5, 6 et 7 illustrent ces dispositifs selon des vues 3D.

La figure 5 illustre l'aspect monolithique de l'échangeur 1 réalisé conformément au procédé de l'invention.

L'échangeur est constitué de plaques P1, P2, ...Pn assemblées entre elles. Ces plaques ont une forme générale identique et forment ainsi après assemblage un bloc monolithique avec entrées et sorties pour les fluides A, B.

Chaque plaque est obtenue par pressage de poudre de céramique et usinage de la céramique à l'état cru sur au moins une face. Cet usinage permet de réaliser le chemin de circulation pour les fluides qui comprend la zone active et des zones de distribution. L'usinage permet de réaliser également des zones d'étanchéité sur les plaques. Les zones de distribution des fluides permettent l'entrée des fluides, l'atteinte des zones actives et la sortie des fluides.

Un premier type de plaques est usiné pour former le chemin d'un premier fluide A et un deuxième type de plaques est usiné pour former le chemin pour un deuxième fluide B. Dans les exemples donnés, l'usinage des différentes zones est réalisé sur une seule face de chaque plaque.

Lors de l'assemblage, les plaques du premier type et du deuxième type sont alternées. L'empilement des plaques permet de former un bloc monolithique présentant plusieurs niveaux de circulation.

L'assemblage des plaques est réalisé par un premier traitement thermique de manière à cuire la céramique et à obtenir un bloc monolithique manipulable et apte à l'opération suivante de brasage qui conférera à l'ensemble l'étanchéité ainsi nécessaire à la fonction d'échangeur de chaleur ou d'échangeur/réacteur.

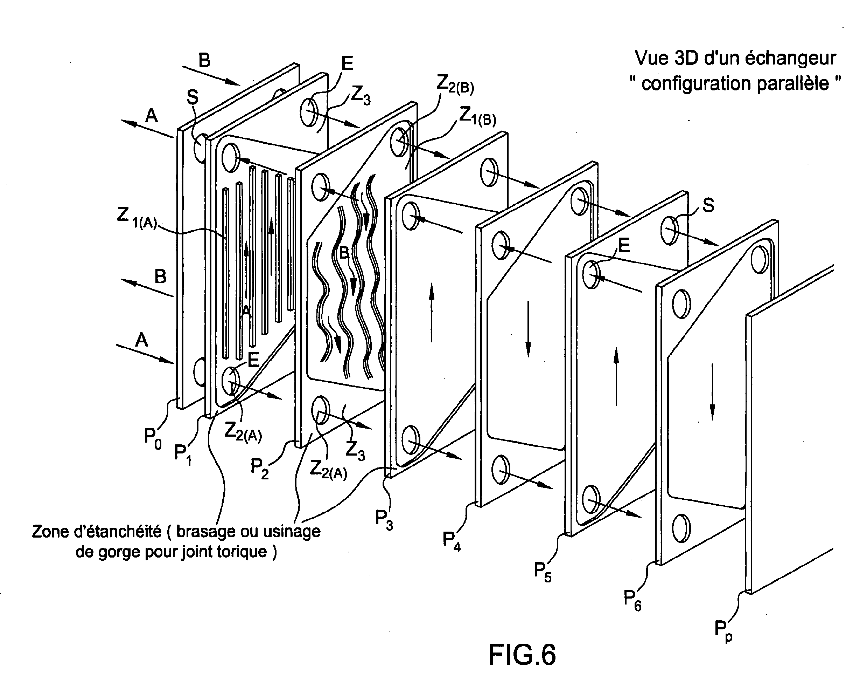

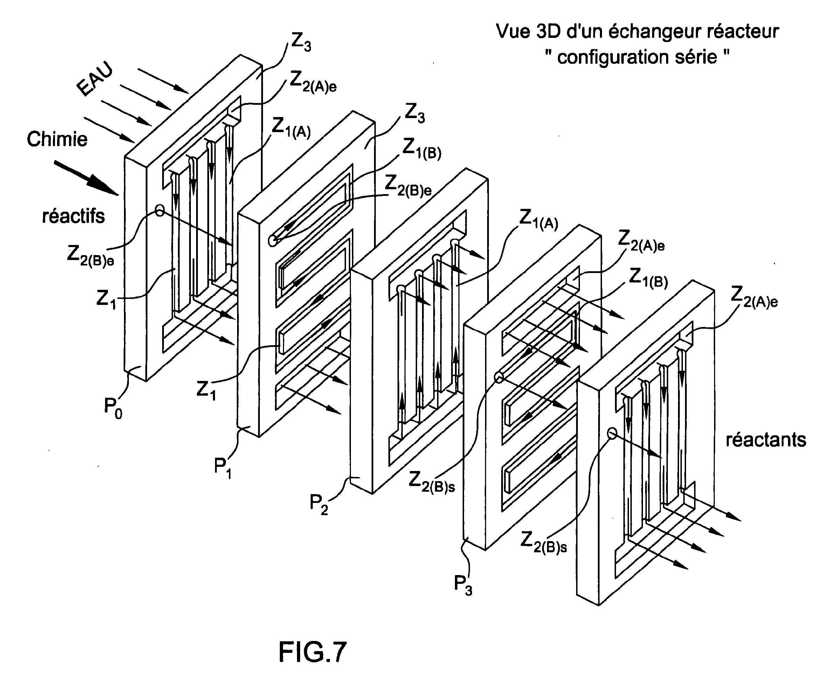

Sur les figures 6 et 7 on peut mieux voir les zones formées sur chaque plaque.

La figure 6 illustre un exemple d'échangeur de chaleur avec une circulation en configuration de type « parallèle ».

La figure 7 illustre un exemple d'échangeur /réacteur avec une circulation de type « série ».

On va maintenant détailler les modes de réalisation illustrés par les figures 6 et 7.

Sur la figure 6, les plaques P1, P3, P5 permettent la circulation du fluide A. Chaque plaque comporte pour cela une zone d'échange thermique munie de canaux Z1 *(A). Cette zone est le résultat d'un usinage de la plaque en céramique à l'état cru formant des sillons indépendants rectilignes ou sinueux. Ces sillons constituent des canaux ou chemins de circulation pour le fluide qui arrive par une entrée E et qui se dirige vers une sortie S ménagée sur la plaque.

Les entrées et sorties sont des orifices traversant les plaques. Chaque plaque comporte une entrée et une sortie pour chaque fluide. Les entrées et sorties usinées sur les plaques forment les zones de distribution Z2 (A) et Z2(B).

Une zone d'étanchéité Z3 est usinée pour séparer les zones de distribution Z2(B) du fluide B des zones de distribution Z2 (A) et de circulation Z1 (A) du fluide A.

De la même façon, les plaques P0, P2, P4 comportent respectivement des zones de circulation Z1 (B) du fluide B, de distribution Z2 (b) de ce fluide et d'étanchéité Z3. Le chemin usiné pour le fluide B peut avoir le même tracé que pour le fluide A ou un tracé légèrement différent tout en suivant sensiblement la même direction afin d'optimiser la surface d'échange.

L'usinage des zones de distribution est réalisé au quatre coins des plaques. Lorsque les plaques sont assemblées, les orifices sont en vis-à-vis. La réalisation de ces zones de distribution est donc une opération simple car il s'agit d'une opération identique pour toutes les plaques constituant l'échangeur.

Les plaques ainsi usinées sont empilées suivant la configuration à obtenir puis traitées thermiquement à des températures adéquates (>2000°C dans le cas de SiC) afin d'obtenir à la fois l'étanchéité des plaques et une cohésion de l'empilement des plaques. Le bloc ainsi formé est rendu définitivement étanche lors de la dernière étape qui consiste à faire migrer aux interfaces une brasure. Pour cela, la brasure est préalablement déposée à la température ambiante sur le bloc fritté à partir des réservoirs R. L'ensemble est ensuite porté à la température de fusion de la brasure, typiquement pour des brasures à base de silicium, la température de brasage se situe dans la plage 1300°C-1500°C.

Bien entendu, le bloc représenté sur la figure 5 comporte une plaque Pp de fin de circulation ne comportant aucun usinage.

L'échangeur peut également être encadré par des plaques en céramiques de manière à augmenter l'étanchéité sur les faces qui ne comportent pas d'entrée ou de sortie. Ces plaques pourront être fixées au bloc par brasage.

La figure 7 illustre un deuxième mode de réalisation d'un échangeur selon le procédé proposé. Ce deuxième mode correspond à la réalisation d'un échangeur/réacteur. Dans ce cas le premier fluide A est par exemple de l'eau et le deuxième fluide B est constitué de réactifs chimiques.

Les plaques sont de deux types. Pour le premier type de plaques telle que P0, P2, P4, chaque plaque comporte une zone de circulation Z1 (A) réalisée par usinage de sillons rectilignes parallèles, indépendants, reliant une zone de distribution Z2 (A) e formant une entrée du fluide A vers une zone de distribution Z2 (A) S formant une sortie de ce fluide. Ces zones de distribution sont sous la forme d'une fenêtre s'étendant sur la largeur de la zone de circulation.

Les plaques du 2^{ième} type comportent une zone de circulation Z1 (B) du deuxième fluide, réalisée par usinage d'un sillon en serpentin dont une extrémité coïncide avec une zone de distribution Z2 (B) e du deuxième fluide. Cette zone forme une entrée du fluide B. L'autre extrémité du serpentin coïncide avec une zone de distribution Z2 (B) s du deuxième fluide formant une sortie pour ce fluide.

Les zones de distribution du deuxième fluide réalisées sur les plaques du deuxième type se présentent sous la forme d'orifices.

## Revendications

1. Procédé de fabrication d'un dispositif de type échangeur de chaleur en céramique, **caractérisé en ce qu'**il comprend les étapes suivantes :
- mise en forme de plaques céramiques et usinage de ces plaques de céramique à l'état cru sur au moins une face, de manière à réaliser des chemins de circulation respectifs pour un premier et un deuxième fluide,
- empilement des plaques crues pour former un ensemble présentant plusieurs niveaux de circulation,
- 1^{er} traitement thermique de densification, dit frittage de manière à obtenir un bloc monolithique densifié pré assemblé,
- 2^{nd} traitement thermique afin d'assurer l'étanchéité de l'assemblage par migration d'une phase fusible, dit brasage aux interfaces du bloc.

2. Procédé de fabrication selon la revendication 1, **caractérisé en ce que** pour le premier traitement thermique, le niveau de température atteint dans le cas du SiC fritté naturel est supérieur à 2000°C.

3. Procédé de fabrication selon la revendication 1 ou 2, **caractérisé en ce** le deuxième traitement thermique consiste à porter l'ensemble à la température de fusion de la brasure soit typiquement pour des brasures à base de silicium, une température de brasage dans la plage 1300°C-1500°C.

4. Procédé de fabrication selon la revendication 1 ou 3, **caractérisé en ce** la pâte de brasure est déposée préalablement au démarrage du deuxième cycle thermique dans les zones aménagées (R) à cet effet sur l'échangeur fritté.

5. Procédé de fabrication selon la revendication 1 ou 3 ou 4, **caractérisé en ce** la pâte à brasure est constituée d'un mélange de poudres minérales et/ou métalliques et de liants organiques.

6. Procédé de fabrication d'un échangeur de chaleur en céramique selon l'une quelconque des revendications précédentes, **caractérisé en ce que** l'usinage à l'état cru des plaques céramiques comprend, la réalisation sur chaque plaque, d'une zone active d'échange de chaleur et la réalisation de zones de distribution dont les géométries sont non limitées à des géométries planes.

7. Procédé de fabrication d'un échangeur de chaleur en céramique selon l'une quelconque des revendications précédentes, **caractérisé en ce que** la mise en forme des céramiques d'échange de chaleur comprend, l'usinage de plusieurs sillons de circulation indépendants permettant une circulation d'un premier fluide entre deux plaques adjacentes, d'une entrée de distribution de la plaque vers une sortie.

8. Procédé de fabrication d'un échangeur de chaleur en céramique selon l'une quelconque des revendications 6 ou 7 **caractérisé en ce que** pour une plaque donnée, la réalisation des zones actives d'échange de chaleur comprend, l'usinage d'un sillon de circulation parcourant la plaque d'une entrée de distribution de la plaque vers une sortie.

9. Dispositif en céramique de type échangeur de chaleur, **caractérisé en ce qu'**il comprend un assemblage de plaques (P1, Pp) céramiques formant un bloc monolithique étanche, ledit dispositif étant obtenu par le procédé selon l'une quelconque des revendications précédentes.

10. Dispositif en céramique selon la revendication 9, **caractérisé en ce que** le bloc monolithique comprend au moins un empilement de plusieurs plaques (P1, Pp), chaque plaque comprenant en outre une entrée et une sortie de distribution (Z2A) pour un premier fluide A et une entrée et une sortie (Z2B) pour un deuxième fluide B, le dispositif permettant ainsi d'assurer une fonction d'échangeur.

11. Dispositif en céramique selon la revendication 9, **caractérisé en ce que** le bloc monolithique comprend au moins un empilement de plusieurs plaques (P1, Pp) de type différent alternées, les plaques d'un premier type comprenant en outre une entrée et une sortie de distribution (Z2A) pour un premier fluide A, et les plaque d'un deuxième type comprenant et une entrée et une sortie (Z2B) pour un deuxième fluide B, le dispositif permettant ainsi d'assurer une fonction d'échangeur/réacteur

12. Dispositif en céramique selon l'une quelconque des revendications 9 à 11, **caractérisé en ce que** les diamètres hydrauliques des canaux de circulation (Z1A, Z1B) des fluides sont constants quelle que soit la section choisie de canal et sa position sur la plaque.

13. Dispositif en céramique selon l'une quelconque des revendications 9 à 11, **caractérisé en ce que** les plaques comportent des extrémités biseautées avant l'étape de brasure afin de former des zones réservoir (R) pour la pâte à brasure.

## Claims

1. A method for making a device of the heat exchanger type in ceramic, **characterized in that** it comprises the following steps :
- shaping ceramic plates and machining these ceramic plates in the green condition on at least one face, so as to produce respective circulation paths for a first and a second fluid,
- stacking green plates in order to form an assembly having several circulation levels,
- a first heat treatment for densification, so-called sintering, in order to obtain a preassembled densified monolithic block,
- a second heat treatment in order to ensure the seal of the assembly by migration of a meltable phase, so-called brazing, at the interfaces of the block.

2. The manufacturing method according to claim 1, **characterized in that**, for the first heat treatment, the temperature level reached in the case of natural sintered SiC is above 2,000°C.

3. The manufacturing method according to claim 1 or 2, **characterized in that** the second heat treatment consists of bringing the assembly to the melting temperature of the brazing i.e. typically for silicon-based brazings, a brazing temperature in the 1,300°C-1,500°C range.

4. The manufacturing method according to claim 1 or 3, **characterized in that** the brazing paste is deposited before starting the second heat cycle in the areas laid out (R) for this purpose on the sintered exchanger.

5. The manufacturing method according to claim 1 or 3 or 4, **characterized in that** the brazing paste consists of a mixture of mineral and/or metal powders and organic binders.

6. The method for manufacturing a heat exchanger in ceramic according to any of the preceding claims, **characterized in that** the machining of the ceramic plates in the green condition comprises the making on each plate of an active heat exchange area and the making of distribution areas, the geometries of which are not limited to planar geometries.

7. The method for manufacturing a heat exchanger in ceramic according to any of the preceding claims, **characterized in that** the shaping of the heat exchange ceramics comprises the machining of several independent circulation grooves allowing a first fluid to circulate between two adjacent plates, from a distribution inlet of the plate towards an outlet.

8. The method for manufacturing a heat exchanger in ceramic according to any of claims 6 or 7, **characterized in that**, for a given plate, the making of the active heat exchange areas comprises the machining of a circulation groove covering the plate from a distribution inlet of the plate towards an outlet.

9. A ceramic device of the heat exchanger type, **characterized in that** it comprises an assembly of ceramic plates (P1, Pp) forming a sealed monolithic block, said device being obtained by the method according to any of the preceding claims.

10. The ceramic device according to claim 9, **characterized in that** the monolithic block comprises at least a stack of several plates (P1, Pp), each plate further comprising a distribution inlet and outlet (Z2A) for a first fluid A and an inlet and outlet (Z2B) for a second fluid B, an exchanger function being thereby ensured by the device.

11. The ceramic device according to claim 9, **characterized in that** the monolithic block comprises at least one stack of several alternating plates (P1, Pp) of different type, the plates of a first type further comprising a distribution inlet and outlet (Z2A) for a first fluid A, and the plates of a second type comprising an inlet and outlet (Z2B) for a second fluid B, an exchanger/reactor function being thereby ensured by the device.

12. The ceramic device according to any of claims 9 to 11, **characterized in that** the hydraulic diameters of the circulation channels (Z1A, Z1B) for the fluids are constant whichever the selected channel section and its position on the plate.

13. The ceramic device according to any of claims 9 to 11, **characterized in that** the plates include bevelled ends before the brazing step in order to form reservoir areas (R) for the brazing paste.

## Patentansprüche

1. Verfahren zur Herstellung einer Vorrichtung vom Typ Wärmetauscher aus Keramik, **dadurch gekennzeichnet, dass** es die folgenden Schritte umfasst:
- Formung von Keramikplatten und Bearbeitung dieser Keramikplatten in ungebranntem Zustand auf mindestens einer Seite, um jeweilige Zirkulationswege für ein erstes und ein zweites Fluid herzustellen,
- Stapeln der ungebrannten Platten, um eine Gruppe mit mehreren Zirkulationsebenen zu bilden,
- erste thermische Bearbeitung zur Verdichtung, Fritten genannt, um einen vorverbundenen verdichteten monolithischen Block zu erhalten,
- zweite thermische Bearbeitung, um die Dichtigkeit der Verbindung durch Migration einer Schmelzphase, Löten genannt, an den Schnittstellen des Blocks zu gewährleisten.

2. Herstellungsverfahren nach Anspruch 1, **dadurch gekennzeichnet, dass** das für die erste thermische Bearbeitung im Fall des natürlich gefritteten SiC erreichte Temperaturniveau höher als 2000 °C ist.

3. Herstellungsverfahren nach Anspruch 1 oder 2, **dadurch gekennzeichnet, dass** die zweite thermische Bearbeitung darin besteht, die Gruppe auf die für Löten auf Siliziumbasis typische Lötschmelztemperatur, eine Löttemperatur im Bereich 1300 °C - 1500 °C zu bringen.

4. Herstellungsverfahren nach Anspruch 1 oder 3, **dadurch gekennzeichnet, dass** die Lötmasse vor Start des zweiten thermischen Zyklus' in den zu diesem Zweck auf dem gefritteten Tauscher eingerichteten Bereichen (R) aufgebracht wird.

5. Herstellungsverfahren nach Anspruch 1 oder 3 oder 4, **dadurch** gekennzeichet, dass die Lötmasse aus einem Gemisch mineralischer und/oder metallischer Pulver und organischer Bindemittel besteht.

6. Verfahren zur Herstellung eines Wärmetauschers aus Keramik nach einem der vorangehenden Ansprüche, **dadurch gekennzeichnet, dass** die Bearbeitung der Keramikplatten in ungebranntem Zustand die Herstellung eines aktiven Wärmetauschbereichs auf jeder Platte umfasst und die Herstellung von Verteilungsbereichen, deren Geometrien nicht auf ebene Geometrien beschränkt sind.

7. Verfahren zur Herstellung eines Wärmetauschers aus Keramik nach einem der vorangehenden Ansprüche, **dadurch gekennzeichnet, dass** die Formung der Wärmetauschkeramiken die Fertigung mehrerer unabhängiger, die Zirkulation eines ersten Fluids zwischen zwei benachbarten Platten erlaubender Zirkulationsfurchen, eines Verteilungseingangs der Platte in Richtung eines Ausgangs umfasst.

8. Verfahren zur Herstellung eines Wärmetauschers aus Keramik nach einem der Ansprüche 6 oder 7, **dadurch gekennzeichnet, dass** die Herstellung der aktiven Wärmeaustauschbereiche für eine bestimmte Platte die Fertigung einer Zirkulationsfurche umfasst, die die Platte von einem Verteilungseingang der Platte in Richtung eines Ausgangs durchquert.

9. Vorrichtung aus Keramik vom Typ Wärmetauscher, **dadurch gekennzeichnet, dass** sie einen Aufbau keramischer Platten (P1, Pp) umfasst, die einen dichten monolithischen Block bilden, wobei die Vorrichtung durch das Verfahren nach einem der vorangehenden Ansprüche hergestellt wurde.

10. Keramikvorrichtung nach Anspruch 9, **dadurch gekennzeichnet, dass** der monolithische Block mindestens einen Stapel mehrerer Platten (P1, Pp) umfasst, wobei jede Platte weiterhin einen Eingang und einen Ausgang zur Verteilung (Z2A) für ein erstes Fluid A und einen Eingang und einen Ausgang (Z2B) für ein zweites Fluid B umfasst, wobei die Vorrichtung damit erlaubt, eine Tauscherfunktion abzusichern.

11. Keramikvorrichtung nach Anspruch 9, **dadurch gekennzeichnet, dass** der monolithische Block mindestens einen Stapel mehrerer sich abwechselnder Platten (P1, Pp) unterschiedlichen Typs umfasst, wobei die Platten eines ersten Typs weiterhin einen Eingang und einen Ausgang zur Verteilung (Z2A) für ein erstes Fluid A umfassen und die Platten eines zweiten Typs einen Eingang und einen Ausgang (Z2B) für ein zweites Fluid B umfassen, wobei die Vorrichtung damit erlaubt, eine Tauscher-/Reaktorfunktion abzusichern.

12. Keramikvorrichtung nach einem der Ansprüche 9 bis 11, **dadurch gekennzeichnet, dass** die hydraulischen Durchmesser der Zirkulationskanäle (Z1A, Z1B) der Fluide unabhängig vom gewählten Kanalabschnitt und seiner Position auf der Platte konstant sind.

13. Keramikvorrichtung nach einem der Ansprüche 9 bis 11, **dadurch gekennzeichnet, dass** die Platten vor dem Schritt des Lötens abgeschrägte Enden aufweisen, um Reservoirbereiche (R) für die Lötmasse zu bilden.
